# EUROPÄISCHE PATENTSCHRIFT

(11) **EP 0 983 663 B1**
(45) Veröffentlichungstag und Bekanntmachung des Hinweises auf die Patenterteilung: **11.02.2004**
(21) Anmeldenummer: 98921395.4
(22) Anmeldetag: 11.03.1998
(51) Int. Cl.: H04L 9/18, G07F 7/10

(54) **VERSCHLÜSSELUNGSVERFAHREN UND -VORRICHTUNG**
ENCRYPTION METHOD AND DEVICE
PROCEDE ET DISPOSITIF DE CODAGE

(30) Priorität: 22.04.1997 DE 19716861
(43) Veröffentlichungstag der Anmeldung: 08.03.2000
(73) Patentinhaber: Deutsche Telekom AG, 53113 Bonn (DE)
(72) Erfinder: KOWALSKI, Bernd, D-57072 Siegen (DE); WOLFENSTETTER, Klaus-Dieter, D-64673 Zwingenberg-Rodau (DE)
(86) Internationale Anmeldenummer: PCT/EP1998/001391
(87) Internationale Veröffentlichungsnummer: WO 1998/048540

(56) Entgegenhaltungen:
- EP-A- 0 616 429
- DE-B- 2 706 421
- US-A- 4 974 193
- US-A- 5 513 261
- FEY P: "VERSCHLUESSELUNG VON SPRACHE UND DATEN" NACHRICHTENTECHNIK ELEKTRONIK, Bd. 40, Nr. 10, 1. Januar 1990, Seiten 376-377, XP000176445 BERLIN (DE)

## Beschreibung

Die Erfindung betrifft ein Verfahren zur Verschlüsselung und eine Vorrichtung zur Durchführung des Verfahrens nach dem Oberbegriff des Patentanspruchs 1 bzw. des Patentanspruchs 5.

Moderne Verschlüsselungsverfahren finden zunehmende Verbreitung in der Informationsverarbeitung und Telekommunikationstechnik. Der Einsatz von Verschlüsselungsverfahren und entsprechenden Vorrichtungen wird jedoch aufgrund der nachfolgend geschilderten Probleme und Einflüsse nachhaltig behindert, obwohl durch die massenhafte Verbreitung gerade auf dem Multimediagebiet und auf dem Gebiet der Informationsverarbeitung ein sehr hoher Sicherheitsstandard gefordert wird:
- Die Verschlüsselung breitbandiger Signale erfordert den Einbau kostspieliger Kryptohardware in Personalcomputer und Endgeräte. Verfügbare preisgünstige Krypto-Chipkarten arbeiten zur Zeit nur mit einer niedrigen Durchsatzrate von deutlich unter 100 kbit/s.
- Verschlüsselungsverfahren sind häufig geschützt und nicht international standardisiert, so daß keine kostengünstigen Massenprodukte mit integrierter Kryptohardware verfügbar sind.
- Kryptohardware für breitbandige Verschlüsselung verwendet aus Kostengründen häufig nur ein einziges Verschlüsselungsverfahren. Somit können auch die damit ausgestatteten Personalcomputer und andere Endgeräte nicht eine beliebige Anzahl von Verschlüsselungsverfahren unterstützen. Dies führt zu einer starken Einschränkung der Kompatibilität der genannten Geräte.
- Kryptohardware unterliegt strengen internationalen Handelsrestriktionen, so daß der Export zum Beispiel von Verschlüsselungs-Endgeräten sehr stark eingeschränkt ist, weshalb die Verwendung solcher Geräte sehr stark beschränkt ist und die Preise für diese Geräte sehr hoch liegen.

In dem Buch von Alfred Beutelspacher, Kryptologie, Vieweg Verlag, 1993, sind Verschlüsselungsverfahen, wie zum Beispiel die Vernam Chiffre beschrieben und dargestellt. Außerdem sind in den ITU/CCITT Empfehlungen X.509, bzw. CACM Communications of the ACM, Vol. 21, No. 2, pp. 120-126, 1978, Verschlüsselungsverfahren wie das RSA-Verfahren beschrieben.

Der Erfindung liegt die Aufgabe zugrunde, ein Verfahren und eine Vorrichtung zum Verschlüsseln zu schaffen, wodurch eine vereinfachte Implementierung unter Vermeidung von teurer und inkompatibler breitbandiger Verschlüsselungshardware realisierbar werden soll, so daß kostenkünstige Massenprodukte mit integrierter Kryptohardware in Zukunft ausgestattet werden können, wodurch der Sicherheitsstandard dieser Produkte wesentlich verbessert werden wird.

Die erfindungsgemäße Lösung für das Verfahren ist im Kennzeichen des Patentanspruchs 1 charakterisiert.

Ausgestaltungen des erfindungsgemäßen Verfahrens sind in den Kennzeichen der Patentansprüche 2 bis 4 offenbart.

Die Lösung für die Vorrichtung ist in dem Kennzeichen des Patentanspruchs 5 charakterisiert. Ausgestaltungen der Vorrichtung sind in den Kennzeichen der Patentansprüche 6 und 7 charakterisiert.

Der große Vorteil der erfindungsgemäßen Lösung besteht darin, daß die Verschlüssler immer mit der gleichen Vernam Chiffre (zum Beispiel EXOR) arbeiten können. Sie sind auch dann ohne Probleme einsetzbar, wenn die externen Krypto- bzw. PCMCIA-Module (Multifunktionaler PC Interface Adapter) unterschiedliche symmetrische und asymmetrische Chiffre verwenden. Die Vernam Chiffre ist auch für hohe Durchsatzraten in Software realisierbar, so daß alle Verschlüssler ohne aufwendige Kryptohardware auskommen und in Massenprodukten kostengünstig eingesetzt werden können, da ihre Herstellung technisch einfach ist. Die externen Kryptomodule bleiben ebenfalls kostengünstig, da der auf Vorrat produzierte Vernamschlüssel auch von einer niedrig-performanten bzw. langsamen Chipkarte, zum Beispiel auf Vorrat für den Vernam-Schlüsselspeicher erzeugt werden kann, ohne den davon entkoppelt arbeitenden eigentlichen breitbandigen Verschlüsselungsprozeß zu verlangsamen.

Die Verschlüssler werden aufgrund des beschriebenen Verfahrens von den Problemen teurer, hochleistungsfähiger und untereinander inkompatibler Kryptohardware befreit. Die Vernam Chiffre ist dagegen sehr einfach und kostengünstig in Software und damit durch Speicherung zu implementieren. Alle komplexen Kryptofunktionen liegen außerhalb des Verschlüsslers. Sie sind modular austauschbar und lassen sich in den vorgeschlagenen, preiswerten und langsamen externen Kryptomodulen, zum Beispiel der Chipkarte oder der PCMCIA-Karte, realisieren. Die verwendeten Verfahren werden bei der Abstimmung zwischen Sender und Empfänger zum Beispiel auf dem Übermittlungswege ausgehandelt bzw. "signalisiert". Der Verschlüssler selbst besteht lediglich aus einer Software, zum Beispiel PC Software oder einem beliebigen anderen Endgerät/Informationssystem mit integrierter Vernam Chiffre, die für den eigentlichen Verschlüsselungsprozeß nicht durch eine aufwendige Kryptohardware unterstützt werden muß.

Die Erfindung wird im folgenden anhand von in der Zeichnung prinzipiell dargestellten Ausführungsbeispielen näher beschrieben.

In der Zeichnung bedeuten:
- Fig. 1: eine vereinfacht dargestellte bekannte Vernam Chiffre;
- Fig. 2: einen modernen bekannten symmetrischen Chiffre;
- Fig. 3: eine Konfiguration mit zusätzlichem Einsatz einer asymmentrischen Chiffre;
- Fig. 4: eine Konfiguration mit Vernam Chiffre;
- Fig. 5: eine weitere Version mit Vernam Chiffre;
- Fig. 6: eine Konfiguration mit externem Kryptomodul und
- Fig. 7: eine weitere Konfiguration mit Kryptomodul.

In der Zeichnung, in der nachfolgenden Beschreibung, in den Patentansprüchen und in der Zusammenfassung werden die in der hinten angegebenen Liste verwendeten Bezugszeichen bzw. Abkürzungen verwendet.

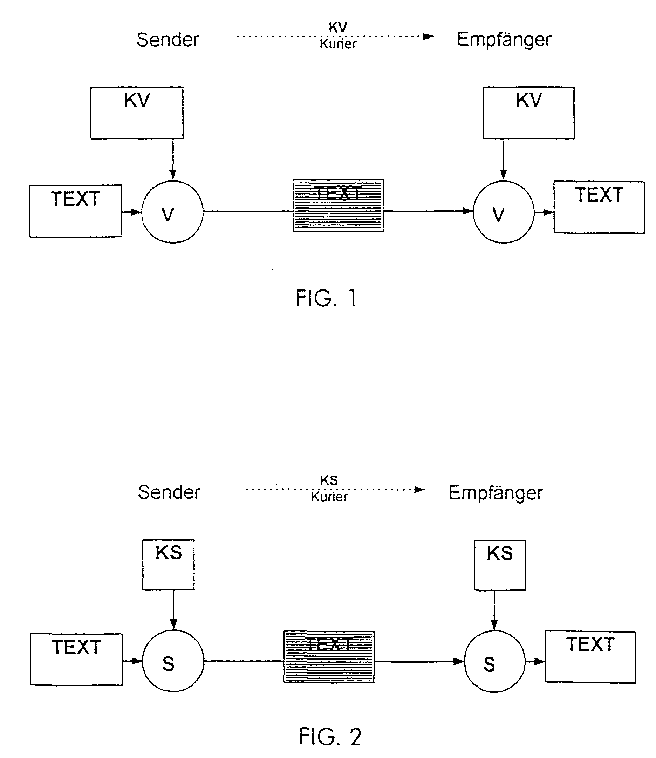

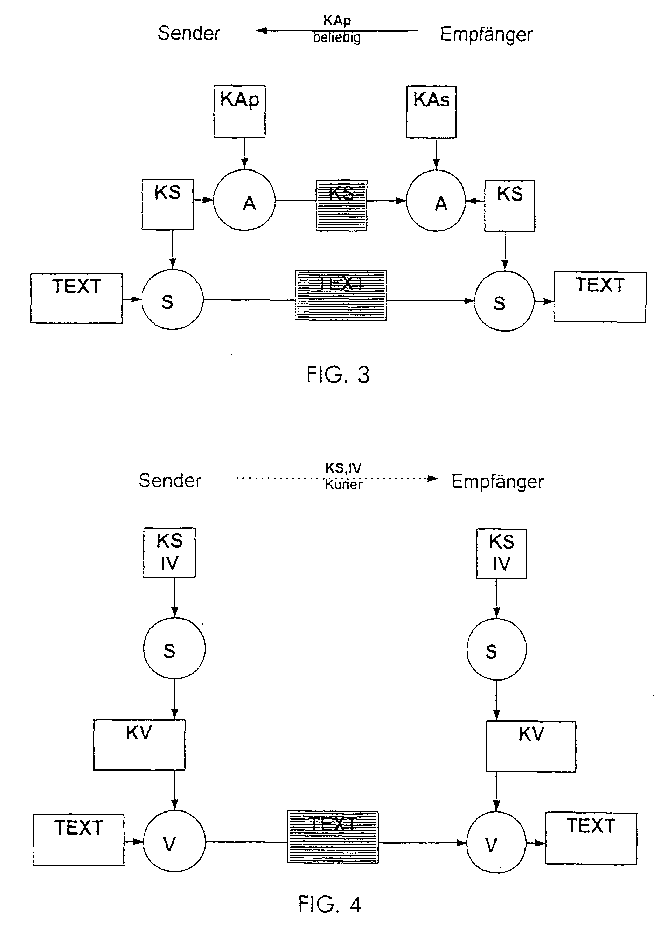

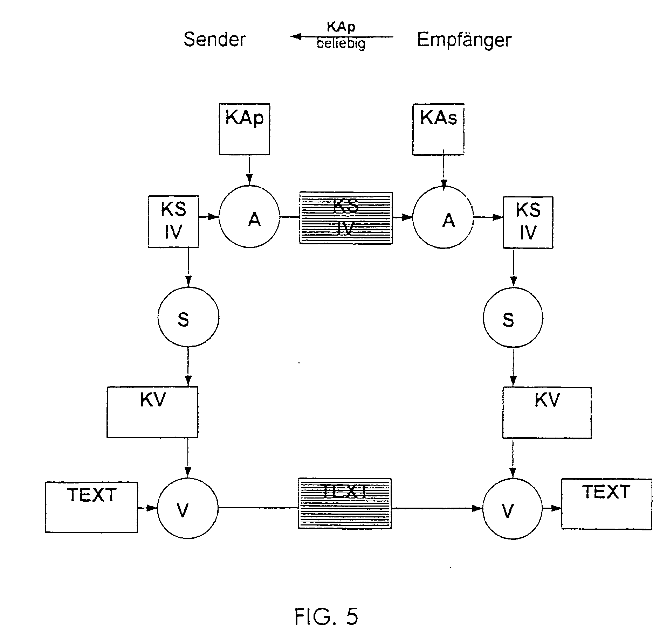

In Fig. 1 ist vereinfacht ein Vernam Chiffre dargestellt. Der hier mit "V" bezeichnete Verschlüsselungsprozeß kann eine sehr einfache mathematische Operation, zum Beispiel EXOR sein, mit dem eine breitbandige Verschlüsselung auch in Software, das heißt ohne die Unterstützung einer speziellen Kryptohardware, möglich ist. Der Nachteil dieser bekannten Verfahren besteht jedoch darin, daß die mit "TEXT" gekennzeichnete Nachricht mit einem Vernam-Schlüssel KV verschlüsselt werden muß, der aus einer Zufallszahl mit der Länge der zu verschlüsselnden Nachricht besteht. Bei langen Nachrichten werden demnach auch lange Vernam-Schlüssel benötigt. Dadurch ist die Vernam Chiffre für den praktischen Einsatz nur bedingt verwendbar. In Fig. 2 ist ein moderner symmetrischer Chiffre S, zum Beispiel DES oder IDEA dargestellt, die auch bei relativ kurzen Schlüssellängen, üblicherweise 128 Bit für den geheimen symmetrischen Schlüssel KS, noch eine hervorragende Sicherheit bieten. DES bzw. IDEA sind Data Encryption Standards (ANSI bzw. ASCOM), ISO 9979. Allerdings muß auch hier wie bei der Vernam Chiffre der zur Ver- und Entschlüsselung erforderliche geheime Schlüssel KS über einen vom Übermittlungsweg der Nachricht unabhängigen und sicheren Kanal, zum Beispiel mittels eines Kuriers, ausgetauscht werden. Die in Fig. 3 gezeigte Konfiguration, die in der in der Einleitung angegebenen Literaturstelle näher beschrieben ist, hat den Nachteil durch den zusätzlichen Einsatz einer asymmetrischen Chiffre A, nämlich zum Beispiel dem RSA-Verfahren, zur Übermittlung des geheimen Verschlüsselungsschlüssel KS vermieden. Hierbei wird der Verschlüsselungsschlüssel KS mit dem öffentlichen asymmetrischen Schlüssel des Empfängers KAp verschlüsselt und kann von diesem anschließend mit dessen geheimen symmetrischen Schlüssel wieder entschlüsselt werden. Der zu diesem Zweck beim Sender benötigte öffentliche Empfängerschlüssel KAp kann diesem vom Empfänger über einen beliebigen unsicheren Kanal übermittelt werden. Natürlich könnte man die Nachricht auch direkt mit dem öffentlichen Empfängerschlüssel KAp verschlüsseln, jedoch ist die erreichbare Performance der für eine asymmetrische Chiffre verfügbare Hardware und Software signifikant geringer als im Falle einer symmetrischen Chiffre, so daß bei großen Nachrichtenlängen und zur Erzielung einer hohen Verarbeitungsgeschwindigkeit die asymmetrische und symmetrische Chiffre meist in der in Fig. 3 gezeigten Kombination, nämlich einem Hybridverfahren, eingesetzt wird. In Fig. 4 wird durch die Verschlüsselung eines geheimen Parameters JV variabler Länge, zum Beispiel n · 180 Bit, mit einem symmetrischen Schlüssel KS, zum Beispiel 128 Bit, eine sehr lange (Pseudo)-Zufallszahl erzeugt, die als Vernam-Schlüssel KV schließlich die zu schützende Nachricht verschlüsselt. Für die Übermittlung des Ver- bzw. Entschlüsselungs-Schlüssels an den Empfänger braucht hier der Kurier jedoch nicht den Vernam-Schlüssel KV zu transportieren, sondern lediglich den Schlüssel KS und den Parameter IV, aus denen der Vernam-Schlüssel KV leicht auf Empfängerseite nachgebildet werden kann, da hier die gleiche Konfiguration wie auf der Senderseite vorhanden ist. In Fig. 5 ist die Verschlüsselung mit kombinierten asymmetrischen, symmetrischen und Vernam Chiffre gezeigt, wie in Fig. 4. Nach Fig. 5 wird im Gegensatz zur Fig. 4, die einen Kurier zum Austausch der geheimen Schlüsselinformationen benötigt, analog zu Fig. 3 hierfür eine asymmetrische Chiffre verwendet. Auf der Senderseite wird der öffentliche Empfängerschlüssel KAp eingespeist und auf der Empfängerseite der asymmetrische Senderschlüssel KAs.

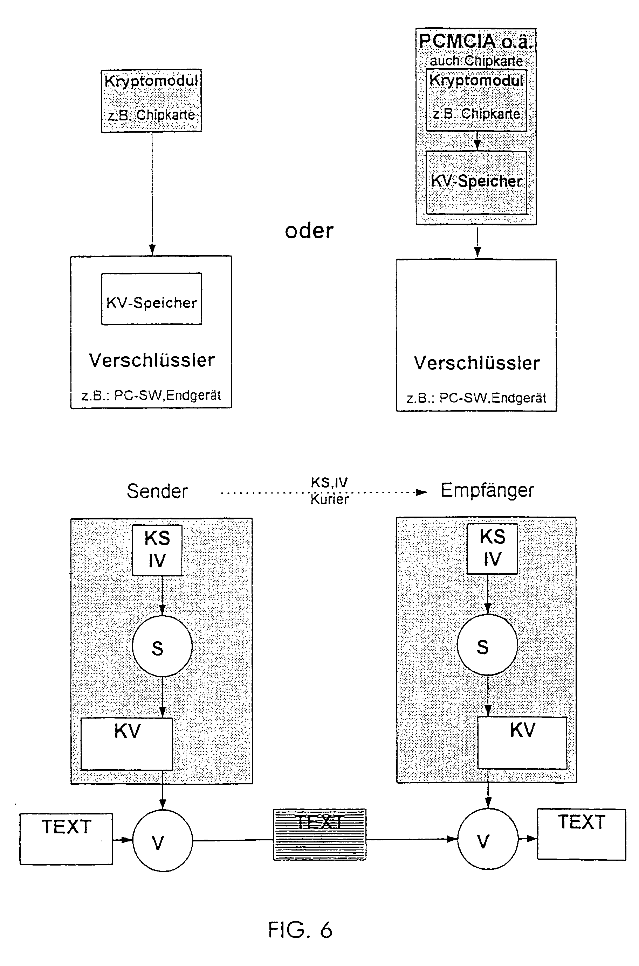

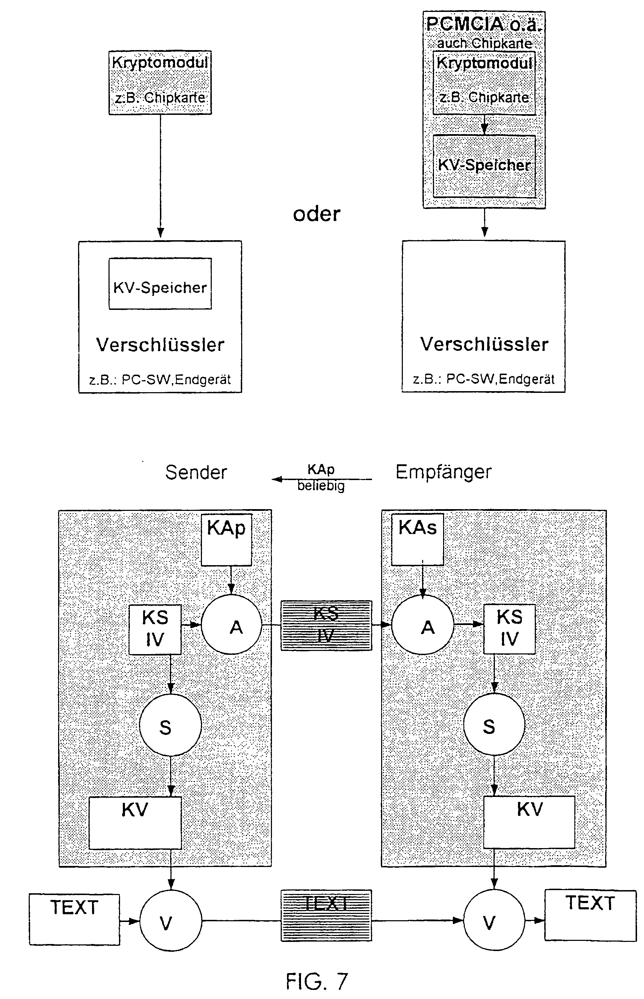

Der Vorteil dieser Verfahrensweise wird in den Figuren 6 und 7 offenbart. In der jeweils oberen Bildhälfte der Fig. 6 und 7 sind daher je zwei typische Endgerätekonfigurationen dargestellt. Die grau unterlegten Elemente stellen die externe Kryptohardware, bestehend entweder aus einer Chipkarte oder aus einem Multifunktionalen PC Interface Adapter bzw. PCMCIA-Modul mit eingebauter spezieller Kryptohardware oder einer eingebauten speziellen Chipkarte dar. Der Verschlüssler wird hingegen als herkömmlicher PC, mit Software oder einem anderen Endgerät realisiert, der jedoch außer der sehr einfachen Vernam Chiffre, wie zum Beispiel EXOR, welche sich auch für die breitbandigen Anwendungen in Software realisieren läßt, keine weitere Kryptotechnik benötigt. In beiden Figuren 6 und 7 ist gezeigt, daß die externen Kryptomodule alle komplexen Kryptofunktionen aufnehmen können, den Vernam-Schlüssel KV sozusagen als Vorrat erzeugen und in einem geeigneten Zwischenspeicher, dem KV Speicher ablegen, bis er vom Verschlüsselungsprozeß durch die logischen Operationen V nach und nach verbraucht wird. Dabei kann der KV Speicher entweder im Personal Computer bzw. Endgerät oder auch im Kryptomodul in Form einer Chipkarte oder eines PCMCIA Moduls eingebaut sein. Der Vorteil der Vorrichtungen nach den Figuren 6 und 7 besteht darin, daß der Verschlüssler immer mit der gleichen Vernam Chiffre arbeiten kann, auch wenn die externen Krypto- bzw. PCMCIA-Module unterschiedlich symmetrische und asymmetrische Chiffre verwenden. Die Vernam Chiffre ist auch für hohe Durchsatzraten in Software realisierbar, so daß alle Verschlüssler ohne aufwendige Kryptohardware auskommen und massenhaft und kostengünstig hergestellt werden können. Die externen Kryptomodule bleiben ebenfalls kostengünstig, da der auf Vorrat produzierte Vernam-Schlüssel auch von einer niedrig-performanten, das heißt langsamen Chipkarte, zum Beispiel auf Vorrat für den KV Speicher erzeugt werden kann, ohne den davon entkoppelt arbeitenden eigentlichen, breitbandigen Verschlüsselungsprozeß zu verlangsamen.

Die Verschlüssler werden aufgrund des beschriebenen Verfahrens von den Problemen teurer, hochperformanter und untereinander inkompatibler Kryptohardware befreit. Die Vernam Chiffre ist hingegen sehr einfach und kostengünstig in Software zu implementieren. Alle komplexen Kryptofunktionen liegen außerhalb des Verschlüsslers. Der große Vorteil besteht auch noch darin, daß sie modular austauschbar sind und sich in den vorgeschlagenen preiswerten und langsamen, externen Kryptomodulen, zum Beispiel einer Chipkarte oder einer PCMCIA-Karte realisieren lassen. Die verwendeten Verfahren werden bei der Abstimmung zwischen Sender und Empfänger, zum Beispiel auf dem Übermittlungsweg ausgehandelt bzw. signalisiert.

Das Verfahren zur kostengünstigen Implementierung auch von hochperformanten Verschlüsselungsfunktionen in einem Verschlüssler, der lediglich aus einer PC Software oder einem beliebigen anderen Endgerät, Informationssystem mit integrierter Vernam Chiffre bestehen kann, die für den eigentlichen Verschlüsselungsprozeß nicht durch eine aufwendige Kryptohardware unterstützt werden muß, zeichnet sich dadurch aus, daß mittels eines geheimen Schlüssels KS mit einer definierten Schlüssellänge und mit Hilfe eines variablen Parameters mit einer bestimmten Bitlänge über eine beliebige symmetrische Chiffre S ein Vernam-Schlüssel KV mit der Länge der zu verschlüsselnden Nachricht erzeugt wird, welcher seinerseits über die Vernam Chiffre die zu schützende Nachricht verschlüsselt, wobei der geheime Schlüssel KS und der Parameter IV entweder über einen vom Nachrichtenübermittlungsweg getrennten, sicheren Kanal oder direkt auf dem Nachrichtenübermittlungsweg, zum Beispiel gesichert durch ein asymmetrisches Verfahren A, vom Sender zum Empfänger übermittelt werden, wobei letzterer mit dem oben beschriebenen Verfahren den Vernam-Schlüssel KV regeneriert, um die empfangene Nachricht damit entschlüsseln zu können. Die symmetrische, gegebenenfalls auch die asymmetrische Chiffre und gegebenenfalls auch der Speicher für den Vernam-Schlüssel, nämlich der KV Speicher sind in einem vom Verschlüssler getrennten externen Kryptomodul, zum Beispiel in Form einer Chipkarte oder eines PCMCIA-Moduls oder ähnlichem untergebracht und im Verschlüssler verbleiben lediglich die Vernam Chiffre und gegebenenfalls der Speicher KV für den Vernam-Schlüssel.

### Liste der Bezugszeichen

- KV: Vernam-Schlüssel
- V: logische Operation, zum Beispiel EXOR
- KS: geheimer symmetrischer Schlüssel
- S: symmetrischer Chiffre, zum Beispiel IDEA
- KAp: Empfänger-Schlüssel (asymmetrisch)
- KAs: Sender-Schlüssel (asymmetrisch)
- A: asymmetrischer Chiffre
- IV: geheimer variabler Parameter
- PCMCIA: Multifunktionaler PC Interface Adapter
- PC-SW: PC Software

## Patentansprüche

1. Verfahren zur vereinfachten Implementierung von Verschlüsselungsverfahren nach dem Vernam Chiffre (V), wobei der Verschlüsselungsprozess eine sehr einfache mathematische Operation, zum Beispiel EXOR, sein kann, **dadurch gekennzeichnet,**
**dass** mittels eines geheimen Schlüssels (KS) mit einer definierten Schlüssellänge (x Bit) und mit Hilfe eines gegebenenfalls variablen Parameters (IV) mit einer Länge von n * x Bit über eine beliebige symmetrische Chiffre (S) ein Vernam-Schlüssel (KV) mit der Länge der zu verschlüsselnden Nachrichten erzeugt wird,
**dass** der Vernam-Schlüssel (KV) über logische Operationen der Vernam Chriffre (V) die zu schützende Nachricht verschlüsselt,
**dass** der geheime Schlüssel (KS) und der Parameter (IV) über einen vom Nachrichtenübermittlungsweg getrennten, sicheren Kanal oder direkt auf dem Nachrichtenübermittlungsweg, gesichert durch ein asymmetrisches Verfahren (A) oder dergleichen, vom Sender zum Empfänger übermittelt werden, und
**dass** der Empfänger den Vernam-Schlüssel (KV) regeneriert und damit die empfangene Nachricht entschlüsselt.

2. Verfahren nach Patentanspruch 1, **dadurch gekennzeichnet,**
**dass** die symmetrische Chiffre und der Speicher für den Vernam-Schlüssel (KV) in einem vom Verschlüssler getrennten Kryptomodul in Form einer Chipkarte, eines Multifunktionalen PC Interface Adapters bzw. -Moduls (PCMCIA) eingebracht werden und
**dass** im Verschlüssler nur die Vernam Chiffre Operationen durchgeführt werden.

3. Verfahren nach Patentanspruch 1, **dadurch gekennzeichnet,**
**dass** die asymmetrische Chiffre und der Speicher für den Vernam-Schlüssel (KV) in einem vom Verschlüssler getrennten externen Kryptomodul realisiert werden und
**dass** im Verschlüssler die Vernam Chiffre die Verschlüsselungsoperationen steuert.

4. Verfahren nach einem der Patentansprüche 1 bis 2, **dadurch gekennzeichnet,**
**dass** im Verschlüssler der Vernam-Schlüssel (KV) abgespeichert wird.

5. Vorrichtung zur Durchführung eines Verfahrens zur vereinfachten Implementierung von Verschlüsselungsverfahren nach dem Vernam Chiffre (V), wobei der Verschlüsselungsprozeß eine sehr einfache mathematische Operation, zum Beispiel EXOR, sein kann, nach einem der Patentansprüche 1 bis 4, mit einem Verschlüssler für Verschlüsselungsverfahren, **dadurch gekennzeichnet,**
**dass** der Verschlüssler für einfache Verschlüsselungsverfahren ausgebildet ist und eine mit dem Verschlüssler zusammenwirkende Kryptohardware vorgesehen ist, die komplexe Kryptofunktion aufweist,
**dass** die Kryptohardware aus einer Chipkarte oder einem Multifunktionellen PC Interface Adapter, PCMCIA Modul, oder dergleichen mit eingebauter spezieller Kryptohardware besteht, und
**dass** der Verschlüssler aus einem herkömmlichen Personalcomputer oder dergleichen, Software oder einem anderen Endgerät besteht, der als einfaches mathematisches Verschlüsselungsverfahren eine sehr einfache Vernam Chiffre für breitbandige Anwendungen in Software realisiert, enthält.

6. Vorrichtung nach Patentanspruch 5, **dadurch gekennzeichnet,**
**dass** die Kryptohardware als externes Kryptomodul ausgebildet ist und einen Zwischenspeicher zur Vorratsspeicherung des Vernam-Schlüssels (KV) aufweist.

7. Vorrichtung nach Patentanspruch 6, **dadurch gekennzeichnet,**
**dass** der Speicher zum Speichern des Vernam-Schlüssels (KV) entweder im Personalcomputer (PC) oder in einem sonstigen Endgerät angeordnet ist.

## Claims

1. Process for the simplified implementation of encryption processes according to the Vernam cipher (V), wherein the encryption process may be a very simple mathematical operation, such as EXOR, **characterized in that**
by means of a secret key (KS) having a defined key length (x bits) and using an, if necessary, variable parameter (IV) having a length of n * x bits, a Vernam key (KV) having the length of the messages which are to be encrypted is generated through the intermediary of any symmetrical cipher (S);
through logic operations of the Vernam cipher (V), the Vernam key (KV) encrypts the message which is to be protected;
the secret key (KS) and the parameter (IV) are communicated from the sender to the recipient over a secure channel separate from the message-transmission path or directly by the message-transmission path, secured by an asymmetrical process (A) or similar; and
the recipient regenerates the Vernam key (KV) and therewith decrypts the received message.

2. Process according to claim 1, **characterized in that**
the symmetrical cipher and the storage for the Vernam key (KV) are installed in a cryptomodule separate from the encryptor, in the form of a chipcard, multifunctional PC interface adapter or module (PCMCIA); and
only the Vernam cipher operations are performed in the encryptor.

3. Process according to claim 1, **characterized in that**
the asymmetrical cipher and the storage for the Vernam key (KV) are implemented in an external cryptomodule separate from the encryptor; and
in the encryptor, the Vernam cipher controls the encryption operations.

4. Process according to any one of claims 1 to 2, **characterized in that**
the Vemam key (KV) is stored in the encryptor.

5. Device for implementing a process for the simplified implementation of encryption processes according to the Vernam cipher (V), wherein the encryption process may be a very simple mathematical operation, such as EXOR, according to any one of claims 1 to 4, with an encryptor for encryption processes, **characterized in that**
the encryptor is designed for simple encryption processes and there is provided cryptohardware which interacts with the encryptor and which comprises complex cryptofunction;
the cryptohardware consists of a chipcard or multifunctional PC interface adapter, PCMCIA module or similar with built-in special cryptohardware; and
the encryptor consists of a conventional personal computer or similar, software or other terminal device which as a simple mathematical encryption process implements in software a very simple Vernam cipher for broadband applications.

6. Device according to claim 5, **characterized in that**
the cryptohardware is in the form of an external cryptomodule and comprises an intermediate storage for storing a stock of Vernam keys (KV).

7. Device according to claim 6, **characterized in that**
the storage for storing the Vernam key (KV) is disposed either in the personal computer (PC) or in another terminal device.

## Revendications

1. Procédé pour l'implémentation simplifiée de procédés de cryptage à l'aide du chiffre de Vernam (V), le processus de cryptage pouvant être une opération mathématique très simple, par exemple EXOR, **caractérisé en ce que**
à l'aide d'une clé secrète (KS) d'une longueur définie (x bit) et au moyen d'un paramètre éventuellement variable (IV) d'une longueur de n * x, une clé de Vernam (KV) de la longueur des messages à crypter est généré par l'intermédiaire d'un chiffre symétrique quelconque (S),
la clé de Vernam (KV) crypte le message à protéger par des opérations logiques à partir du chiffre de Vernam (V),
la clé secrète (KS) et le paramètre (IV) sont transmis de l'expéditeur au destinataire par un canal sûr, séparé de la voie de transmission, ou directement sur la voie de transmission, avec sécurisation par un procédé asymétrique (A) ou équivalent et
le destinataire régénère la clé de Vernam (KV) et décrypte ainsi le message reçu.

2. Procédé selon la revendication 1, **caractérisé en ce que**
le chiffre symétrique et la mémoire contenant la clé de Vernam (KV) sont insérés dans un module de cryptage séparé du codeur sous forme d'une carte à puce ou d'un adaptateur ou module d'interface PC multifonctionnel (PCMCIA) et
seules sont effectuées dans le codeur les opérations sur chiffre Vernam

3. Procédé selon la revendication 1, **caractérisé en ce que**
le chiffre asymétrique et la mémoire contenant la clé de Vernam (KV) sont réalisés dans un module de cryptage externe séparé du codeur et
dans le codeur, le chiffre de Vernam pilote les opérations de cryptage.

4. Procédé selon l'une des revendications 1 à 2, **caractérisé en ce que**
la clé de Vernam (KV) est mémorisée dans le codeur

5. Dispositif de mise en oeuvre d'un procédé pour l'implémentation simplifiée de procédés de cryptage à l'aide du chiffre de Vernam (V), le processus de cryptage pouvant être une opération mathématique très simple, par exemple EXOR, selon l'une des revendications 1 à 4, avec un codeur pour le procédé de cryptage, **caractérisé en ce que**
le codeur est conçu pour des procédés de cryptage simples, un matériel de cryptage à fonctions de cryptage complexes étant prévu en interopérabilité avec le codeur,
le matériel de cryptage consiste en une carte à puce ou un adaptateur d'interface PC multifonctionnel, un module PCMCIA ou un dispositif semblable avec matériel de cryptage spécial intégré et
le décodeur consiste en un ordinateur personnel usuel ou équivalent, un logiciel ou un autre équipement terminal, réalisant en logiciel, comme procédé mathématique simple de cryptage, un chiffre de Vernam très simple pour applications à large bande.

6. Dispositif selon la revendication 5, **caractérisé en ce que**
le matériel de cryptage est conçu comme module de cryptage externe et comporte une mémoire intermédiaire pour mémorisation de la clé de Vernam (KV).

7. Dispositif selon la revendication 6, **caractérisé en ce que**
la mémoire servant à la mémorisation de la clé de Vernam (KV) est placée soit dans l'ordinateur personnel (PC), soit dans un autre équipement terminal.
